**Europäisches Patentamt**

**European Patent Office**

**Office européen des brevets**

(19)

(11) Veröffentlichungsnummer : **0 479 839 B1**

(12) ## EUROPÄISCHE PATENTSCHRIFT

(45) Veröffentlichungstag der Patentschrift :
28.09.94 Patentblatt 94/39

(51) Int. Cl.$^5$ : **G02B 6/44**

(21) Anmeldenummer : **90909628.1**

(22) Anmeldetag : **22.06.90**

(86) Internationale Anmeldenummer :
**PCT/DE90/00477**

(87) Internationale Veröffentlichungsnummer :
**WO 91/00536 10.01.91 Gazette 91/02**

(54) **OPTISCHES KABEL MIT MINDESTENS EINER LICHTWELLENLEITERADER.**

(30) Priorität : **28.06.89 DE 3921184**
**27.09.89 DE 3932251**

(43) Veröffentlichungstag der Anmeldung :
**15.04.92 Patentblatt 92/16**

(45) Bekanntmachung des Hinweises auf die
Patenterteilung :
**28.09.94 Patentblatt 94/39**

(84) Benannte Vertragsstaaten :
**AT BE CH DE ES FR GB IT LI NL SE**

(56) Entgegenhaltungen :
**EP-A- 0 022 036**
**EP-A- 0 157 516**
**EP-A- 0 165 632**
**DE-A- 3 027 743**
**DE-B- 2 459 997**
**DE-U- 8 901 404**
**GB-A- 2 215 081**

(73) Patentinhaber : **SIEMENS**
**AKTIENGESELLSCHAFT**
**Wittelsbacherplatz 2**
**D-80333 München (DE)**

(72) Erfinder : **OESTREICH, Ulrich**
**Karl-Witthalm-Strasse 15**
**D-8000 München 70 (DE)**
Erfinder : **ZEIDLER, Günter**
**Erikastrasse 3 A**
**D-8034 Germering (DE)**
Erfinder : **BARFUSS, Jürgen**
**Zielstattstrasse 139**
**D-8000 München 70 (DE)**
Erfinder : **GLASER, Heinz**
**Erikastrasse 18**
**D-8034 Germering (DE)**

## Beschreibung

Die Erfindung betrifft eine Lichtwellenleiterader für ein optisches Kabel mit mindestens einer eine Schutzhülle aufweisenden Lichtwellenleiterader, die eine im wesentlichen rechteckige Innenöffnung aufweist, welche eine Kammer zur Aufnahme der Lichtwellenleiter bildet, wobei in der Kammer jeweils eine Anzahl von Bandleitungen mit jeweils mehreren Lichtwellenleitern in Form eines Bandleitungsstapels untergebracht sind und wobei die Lichtwellenleiterader eine Biegeebene mit geringstem Biegewiderstand aufweist und die Bandleitungen mit ihren Breitseiten im wesentlichen parallel zu dieser Biegeebene angeordnet sind.

Aus der GB-A3 0 157 516 ist ein optisches Kabel bekannt, bei dem innerhalb eines Kabelmantels eine kreisförmige Öffnung vorgesehen ist, die zur Aufnahme einer mit Zugelementen versehenen Untereinheit dient. Diese Untereinheit hat im wesentlichen etwa rechteckförmigen Querschnitt und stellt ein flaches bandförmiges Gebilde dar. Im Inneren ist eine Öffnung vorgesehen, in der zwei Lichtwellenleiter-Bändchen angeordnet sind, zwischen den nur ein sehr geringer Abstand besteht. Um eine Überlänge zu erzeugen wird die Untereinheit als Ganzes durch eine Welleinrichtung hindurchgeführt, so daß nach diesem Arbeitsvorgang die Untereinheit eine wellenförmige Struktur angenommen hat. Für die Unterbringung einer derartigen wellenförmigen Struktur ist ein Raum erforderlich, der mindestens der Auslenkung der Wellung entspricht. Zudem ist es notwendig, daß für die Wellung ein eigener Wellvorgang durchgeführt wird, wobei dieser Wellvorgang nicht ohne eine gewisse mechanische Beanspruchung der Lichtwellenleiter-Bändchen durchführbar ist.

Aus der DE-U-89 01 404 ist ein optisches Kabel bekannt, bei dem ein Bandleitungsstapel in einer rohrförmigen Schutzhülle untergebracht ist. Diese Schutzhülle weist einen kreisförmigen Querschnitt auf. Um den Zusammenhalt der Lichtwellenleiter-Bändchen innerhalb des Stapels zu gewährleisten, sind in bestimmten Abständen fest haftende Verbindungselemente vorgesehen, welche den Bandleitungsstapel fixieren. Derartige zusätzliche Verbindungselemente stellen jedoch nicht nur einen zusätzlichen Aufwand dar, sondern sie bedingen auch eine geringere Verschiebbarkeit der Lichtwellenleiter-Bändchen innerhalb des Stapels. Außerdem bringen die Verbindungselemente stets auch eine mechanische Beanspruchung der Bändchen mit sich.

Eine Lichtwellenleiterader dieser Art ist aus der DE-OS 30 27 743 bekannt, wobei die Überlänge des Lichtwellenleiters gegenüber der Schutzhülle der Lichtwellenleiterader dadurch erzielt wird, daß der oder die Lichtwellenleiter mit Vorschub eingebracht werden. Auf diese Weise erhalten die Lichtwellenleiter einen etwa wellenförmigen Verlauf, wobei eine zusätzlich eingebrachte gelartige Füllmasse die Lichtwellenleiter in dieser wellenförmigen Struktur stabilisiert.

In vielen Fällen ist es jedoch wünschenswert, nicht einzelne Lichtwellenleiter Innerhalb einer Schutzhülle anzuordnen, sondern diese in Form von Bandleitungen zu führen, was insbesondere die Spleißtechnik erheblich vereinfacht. Aus der DE-AS 24 59 997 ist es bekannt, mehrere Lichtwellenleiter nebeneinander anzuordnen und diese auf einer Trägerfolie, z.B. aus Kunststoffmaterial in diskreten Punkten zu fixieren. Die Trägerfolie selbst verläuft daher nicht geradlinig. Da die Lichtwellenleiter außerhalb dieser Fixierungen frei verlaufen ist es möglich, für sie in diesen Bereichen eine wellenförmige Struktur zu realisieren. Dabei ist jedoch zu beachten, daß eine Fixierung von Lichtwellenleiter an bestimmten Punkten stets mit einer gewissen mechanischen Belastung in diesem Bereich einhergeht. Beim Aufbau eines Kabels wird so vorgegangen, daß mehrere zugfeste Elemente, z.B. in Form von Stahldrähten in einem flachen Kabelmantel vorgesehen sind, wobei innerhalb rechteckiger Öffnungen eine oder mehrere Bandleitungen angeordnet werden. Die rechteckigen Öffnungen selbst sind so gewählt, daß eine Bandleitung in ihrer Breite der größten Querausdehnung der Öffnung entspricht.

In der EP-A2 0 165 632 ist ein optisches Übertragungselement beschrieben, bei dem innerhalb einer rohrförmigen Schutzhülle ein Stapel aus mehreren Bandleitungen angebracht ist. Um eine gleichmäßige Beanspruchung der Lichtwellenleiter zu erreichen, ist dieser Stapel in sich tordiert, was herstellungsmäßig einen erheblichen Aufwand erfordert und auf jeden Fall zu Zug- Druck- und Torsionsspannungen in den Fasern führt. Die auf diese Weise herstellbare Überlänge ist äußerst gering und die Position der Bändchen im Kabel selbst ist um so weniger bestimmt je weniger Bandleitungen in der Kabelseele untergebracht sind.

Der vorliegenden Erfindung liegt die Aufgabe zugrunde, einen Weg aufzuzeigen, auf dem eine schonende Unterbringung von Bandleitungen mit Lichtwellenleitern innerhalb einer Schutzhülle ermöglicht ist und sich in einfacher Weise eine entsprechende Überlänge bereitstellen läßt. Gemäß der Erfindung wird diese Aufgabe bei einer Lichtwellenleiterader der eingangs genannten Art dadurch erreicht, daß der Bandleitungsstapel mit seinen Bandleitungen wellenförmig geschwungen derart in der Kammer geführt ist, daß die Auslenkung des Bandleitungsstapels quer zur Biegeebene mit dem geringsten Biegewiderstand verläuft, daß die Höhe der Kammer so bemessen ist, daß die aus dem kleinstmöglichen Trommelradius folgende Straffung der äußersten Bandleitung und die Stauchung der innersten Bandleitung ohne eine unzulässig hohe mechanische Beanspruchung der Bandleitungen vor sich geht, daß durch die wellenförmige Führung des Bandleitungsstapels dieser eine Art Bandfederstruktur bildet und daß die Bandleitungen seitlich ein gewisses Spiel zur Kammerwandung

2

aufweisen derart, daß ein Umklappen oder Querstellen der Bandleitungen verhindert ist.

Die im wesentlichen rechteckige Innenöffnung der Lichtwellenleiterader ermöglicht eine definierte Führung der Bandleitungen. Dadurch daß die Lichtwellenleiterader eine bevorzugte Biegeebene aufweist, wobei die Bandleitungen mit ihren Breitseiten im wesentlichen parallel zu dieser bevorzugten, d.h. den geringsten Biegewiderstand aufweisenden Biegeebene angeordnet sind, wird erreicht, daß die Biegebeanspruchung, z.B. beim Verlegen eines Kabels auf die einzelnen Bandleitungen gering gehalten werden kann. Es ist bei der Erfindung auch vermieden, daß beim kleinsten zulässigen Trommelradius eine unerwünschte mechanische Beanspruchung einer der Bandleitungen des Bandleitungsstapels eintritt. Durch die wellenförmige Führung der Bandleitungen wird zum einen die Uberlänge gewährleistet, zum anderen aber auch sichergestellt, daß die Bandleitungen zwar lose (elastisch) innerhalb der Kammer angeordnet sind, aber gleichzeitig in ihrer Lage definiert gehalten werden, d.h. daß kein Umklappen oder Querstellen der einzelnen Bandleitungen zugelassen wird. Die Bandleitungen selbst bilden eine Art "Bandfederstruktur", die elastisch im Inneren der Kammer gehalten ist und eine größtmögliche Beweglichkeit mit gleichzeitiger definierter Lage verbindet.

Weiterbildungen der Erfindung sind in Unteransprüchen wiedergegeben.

Die Erfindung und ihre Weiterbildungen werden nachfolgend anhand von Zeichnungen näher erläutert. Es zeigen:

Figur 1        in perspektivischer Darstellung ein optisches Kabel mit einer erfindungsgemäßen Lichtwellenleiterader und

Figur 2        die Lage der Bandleitungen eines Stapels beim Biegevorgang.

Figur 3        ein erstes Ausführungsbeispiel eines erfindungsgemäßen Kabels mit zwei Lichtwellenleiteradern und

Figur 4        ein zweites Ausführungsbeispiel eines erfindungsgemäßen Kabels mit drei Lichtwellenleiteradern.

Das optische Kabel OC weist einen Außenmantel AM auf, in dessen Innerem eine Lichtwellenleiterader AD angeordnet ist, deren Längsachse mit der Kabelachse zusammenfällt. Die Lichtwellenleiterader AD weist eine Schutzhülle SH mit rechteckigen Außenquerschnitt auf, wobei im Inneren eine Kammer CA gebildet wird, die ebenfalls einen rechteckigen Querschnitt aufweist. Die Rechteckform der Kammer CA entspricht der Rechteckform der Außenkontur, d.h. beide Rechteckformen sind etwa ähnlich und die Kammerabmessungen entsprechen den Außenabmessungen nach Abzug der doppelten (etwa konstanten) Wandstärke. Wenn die Bandleitungen um die leichte Achse BP biegbar sein sollen und eine nutzbare Uberlänge aufweisen, die durch die Biegung nicht so sehr beeinflußt werden soll, muß die Kammer CA hochkant gebogen werden, was bei Verwendung von Kunststoff für die Schutzhülle SH leicht durchzuführen ist.

Die bevorzugte Biegeebene ("neutrale Ebene") liegt in einer Ebene BP, welche mit der kleinen Achse der Lichtwellenleiterader AD zusammenfällt und die somit quer zur großen Achse AB der rechteckförmigen Lichtwellenleiterader AD verläuft. Um definierte Verhältnisse bezüglich diese Biegeebene BP zu schaffen, sind dort zusätzlich zug- und stauchfeste Elemente angeordnet, beispielsweise in Form von Stahldrähten, die in dem vorliegenden Beispiel mit TE1 und TE2 bezeichnet sind. Es lassen sich auf jede Seite auch mehr als ein Stahldraht anordnen, wobei deren Positionierung stets jedoch symmetrisch zur Biegeebene BP erfolgt. Im Inneren der Kammer CA sind n Bandleitungen BL1-BLn angebracht und zwar so, daß sie mit ihren Breitseiten, wie dargestellt, parallel zur Biegeebene BP verlaufen. Wenn die Breite der Kammeröffnung mit B bezeichnet ist, so ist die Länge der Breitseite b der Lichtwellenleiterbändchen BL1-BLn zweckmäßig in einem Bereich zu wählen, für den gilt:

$$b = 0{,}6 \, B \text{ bis } 0{,}9 \, B$$

Die Bandleitungen sollen also seitlich mit einem gewissen Spiel und damit etwas frei beweglich untergebracht sein, jedoch mit Sicherheit so, daß ein Umklappen oder Umkippen um ihre Längsachse vermieden wird.

Um diese definierte Lage der Bandleitungen innerhalb der Kammer CA sicherzustellen, ein Umklappen zu verhindern und trotzdem eine Beweglichkeit für die Bandleitungen zu erhalten, sind die Bandleitungen, wie gestrichelt dargestellt, in Wellenform geführt (und zwar bevorzugt in Form einer Sinuslinie). Diese wellenförmige Führung erfolgt so, daß jeweils der Wellenberg am oberen Ende (Schmalseite) der rechteckigen Kammer CA anliegt, während das Wellental das untere Ende (Schmalseite) der Kammer CA berührt. Dadurch liegen die Bandleitungen in der Art einer Bandfeder in definierter Lage innerhalb des rechteckigen Querschnitts, weisen eine ausreichende Uberlänge auf und sind vor dem Umklappen geschützt.

Bezüglich der Höhe H der Kammer CA gilt die Beziehung

$$H = n \, h + 2a + X$$

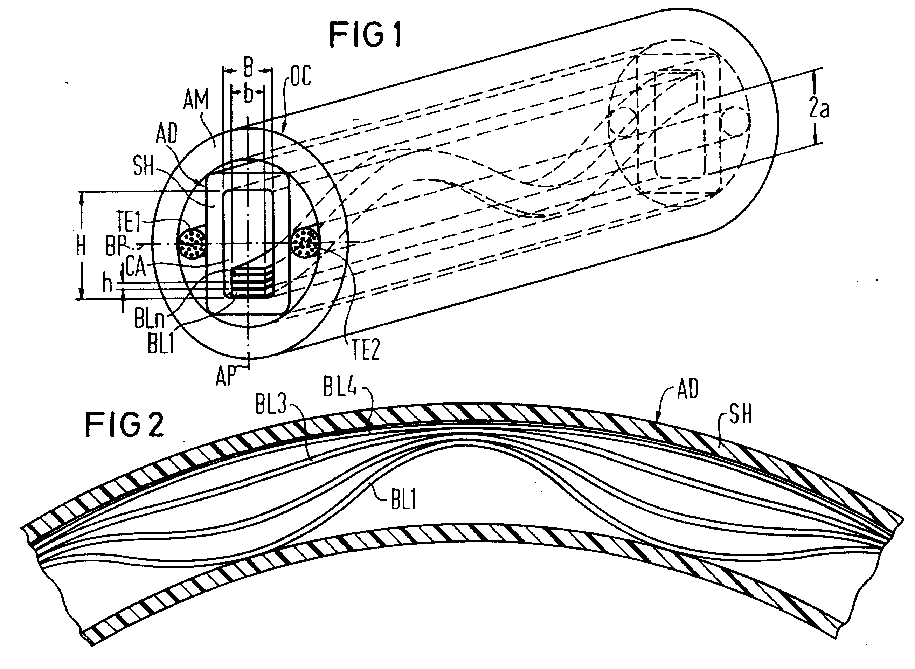

Dabei ist 2a der Abstand zwischen einem Minimum und einem Maximum des wellenförmigen Verlaufs einer Bandleitung, z.B. BL1, h die Dicke einer Bandleitung und n die Anzahl der Bandleitungen, die als Stapel im Inneren vorgesehen sind. X ist ein Zuschlag, der daraus folgt, daß das Kabel auf einen kleinsten Radius gewickelt werden muß und die Dicke des Bändchenstapels (vgl. Fig. 2) zu einem Ausziehen der Wellen der äußersten Bandleitungen BL4, aber einem Vergrößern der Wellen der innersten Bandleitung BL1 führt. Die Biegeebene BP und die Bändchen BL1 bis BL4 (d.h. n = 4) stehen in Fig. 2 senkrecht zur Zeichenebene. Wenn man damit rechnet, daß die äußerste und die innerste Bandleitung BL1 und BL4 um jeweils höchstens 1 mm aus der mittleren Biegeebene herausgehoben sind und die geringstmögliche Überlänge $2 \cdot 10^{-3}$ beträgt, können nicht mehr als $2 \cdot 10^{-3}$ aus der am stärksten gestreckten Bandleitung BL4 entnommen werden, während die am stärksten gestauchte Bandleitung BL1 $2 \cdot 10^{-3}$ mehr unterzubringen hat, was einer Amplitudenvergrößerung entspricht, die etwa 0,3 mm und einer Kammererhöhung, die etwa 0,5 mm ausmacht $(\frac{\Delta l}{l} \approx \frac{a^2 \cdot \pi^2}{p^2})$.

Für $2 \cdot 10^{-3}$ Überlänge (gestreckt) ist also ein kleinster Trommelradius von $\frac{l}{2 \cdot 10^{-3}}$ 500 mm, für $4 \cdot 10^{-3}$ von 250 mm zulässig, wobei die Kammer im ersten Fall $2 \cdot 0,85 + 6 \cdot 0,3 + 0,6 = 4,1$ mm hoch sein muß, im zweiten Fall $2 \cdot 1,25 + 6 \cdot 0,3 + 0,6 = 4,9$ mm. Die Kammerhöhe H bewegt sich bei sechs 0,3 mm dicken Bandleitungen BL1-BLn und Amplituden a um 0,85 bis 1,25 mm, also um 4,5 mm, die Kammerbreite B um 1,6 mm. Der übliche (minimale) Trommelradius für ein Kabel von 10 mm Durchmesser dürfte etwa 300 bis 400 mm betragen, so daß eine eingebaute Überlänge von $3 \cdot 10^{-3}$ bis $4 \cdot 10^{-3}$ erforderlich ist. Das ganze ergibt eine obere Höhe n h des Bandleitungsstapels von etwa 1,5 bis 1,8 mm, d.h. z.B. 5 bis 6 Bandleitungen à 0,3 mm Dicke.

Es ist möglich, die Zwickelräume außerhalb der Lichtwellenleiter AD bis hin zur Innenwand des Außenmantel AM mit einer Füllmasse zu verschließen, um das Kabel längswasserdicht zu halten.

Ebenso ist es möglich, den verbleibenden Innenraum der Kammer CA mit einer sehr weichen (vorzugsweise thixotropen) Füllmasse zu füllen.

Das Herstellungsverfahren für ein derartiges Kabel läuft folgendermaßen ab:

Die Wellungen der Bandleitungen werden vorteilhaft durch Wärmeschrumpfung der Umhüllung der Bandleitung erzeugt.

Die Kalibrierung wird von außen vorgenommen, ohne das Volumen der Ader AD nennenswert zu verändern.

Es ist auch möglich, mehrere Adern AD in der Kabelseele zu führen und zwar parallel zueinander, wobei für jede Ader die vorstehend erläuterten Festlegungen gelten.

Für die Konstruktion eines optischen Kabels OC können vorteilhaft etwa folgende Festlegungen getroffen werden:

```
(4 Fasern in BL1-BLn)        B              1,4  bis 1,6 mm
(8 Fasern in BL1-BLn)        B              2,6  bis 3,0 mm
(4 Fasern in BL1-BLn)        b      etwa    1,1  mm
(8 Fasern in BL1-BLn)        b      etwa    2,5  mm
                             n              1    bis 6
        Wandstärke von      SH              0,6  bis 1,2 mm
                             a              0,5  bis 1,5 mm
                             h              0,25 bis 0,35 mm
                             H              4    bis 6 mm
```

Für die Dimensionierung der Sinuswelle gelten vorteilhaft etwa folgende Festlegungen:
Für die Sinuswelle gilt die Beziehung

$$\frac{\Delta l}{l} \approx \frac{a^2 \cdot \pi^2}{P^2} \quad (1)$$

und

für den kritischen Krümmungsradius ρ im Scheitelpunkt

$$\rho = \frac{P^2}{4a \cdot \pi^2} \quad (2),$$

so daß sich
bei Wahl dieses Krümmungsradius und der gewünschten Überlänge

$$a = 4 \cdot \rho \cdot \frac{\Delta l}{l} \quad (3)$$

ergibt.

Für die extremen Werte

$$\rho = 60 \text{ mm und } \frac{\Delta l}{l} = 6.10^{-3}$$

(im gebogenem aufgewickelten Zustand des Kabels), erhält man eine Amplitude von 1,5 mm (bei einer Periodenlänge P = 60 mm), so daß die (gefüllte) Kammer eine Höhe H von 3,0 mm + 1,8 = 4,8 und eine Breite B von 1,6 mm für 4-Faser-Bändchen oder 3 mm für 8-Faser-Bändchen erhält.

Der kritische Zustand des Kabels ist tatsächlich weder der unter Zug noch der unter Schrumpfung, sondern unter Biegung auf der Trommel, weil hier das Stauchen der innersten Bandleitung am heftigsten und unausweichlich ist. Normale Biegungen auf der Strecke können unter fast beliebig kleinem Radius stattfinden, da auf beide Seiten gestreckte Stücke für den Längenausgleich zur Verfügung stehen. Die innerste Bandleitung gleitet am stärksten nach beiden Seiten.

Wenn die Kammerhöhe H klein werden soll, muß der Trommelkern größer werden.

Gewaltsame Biegungen des Kabels in der schweren (falschen) Ebene AP werden vermieden, weil das Kabel sich dann um etwa 90 ° über eine längerer Strecke dreht, d.h. entsprechend ausweicht und sich wieder "richtig" einstellt, und zwar vor allem durch den Einfluß der Stützelemente TE1 und TE2. Eine Verbesserung beim Aufwickeln läßt sich erzielen, indem das Kabel OC abwechselnd links und rechts tordiert aufgewickelt wird.

Bei der Dimensionierung des Bändchenstapels im Hinblick auf den kleinsten Krümmungsradius der Kabeltrommel, auf welchen das optische Kabel OC aufgewickelt werden soll, ist unter Berücksichtigung der Erläuterungen zu Figur 2 zweckmäßigerweise folgendermaßen vorzugehen:

Die auf der Außenbahn liegende Bandleitung BL4 sollte vorteilhaft im aufgewickelten Zustand gerade noch nicht gestreckt oder zumindest nicht gespannt sein, sodaß beim Aufwickelvorgang selbst diese Bandleitung noch eine gewisse kleine Überlänge aufweist bzw. zumindest nicht unter durchgehende Zugspannung gesetzt wird.

Für die stärker gestauchte untere Bandleitung BL1 ist zweckmäßig als Grenze anzusetzen, daß im aufgetrommelten Zustand deren Krümmungsradius im Bereich der stärksten Krümmung nicht unter 60 mm sinken sollte.

Für das Verhältnis der Höhe H der Kammer zur Breite B der Kammer ist es zweckmäßig, Werte von H : B von 2 : 1 bis 4 : 1 einzuhalten.

Die Periodenlänge P des wellenförmig geschwungenen Bandleitungsstapels sollte zwischen 40 und 80 mm gewählt werden, wobei vorzugsweise Werte um 60 mm anwendbar sind.

Der Zuschlag X bei der Berechnung der Höhe der Kammer (H = nh + 2a + X) sollte vorteilhaft zwischen 0,4 und 0,8 mm gewählt werden. Es ist auch möglich, das Kabel selbst durch die Lichtwellenleiterader AD zu bilden, d.h. ein Außenmantel AM ist nicht erforderlich.

Mit einem nach der Erfindung aufgebauten Kabel läßt sich eine schonende Unterbringung von Bandleitungen innerhalb einer Schutzhülle ermöglichen, wobei in einfacher Weise die gewünschte Überlänge bereitgestellt werden kann. Die im wesentlichen rechteckige Innenöffnung der Lichtwellenleiterader ermöglicht eine definierte Führung der Bandleitungen. Dadurch daß die Bandleitung mit ihren Breitseiten im wesentlichen parallel zur bevorzugten Biegeebene angeordnet sind wird erreicht, daß die Biegebeanspruchung der einzelnen Bandleitungen gering gehalten werden kann. Durch die wellenförmige Führung der Bandleitungen wird zum einen die notwendige Überlänge gewährleistet, zum anderen aber auch sichergestellt, daß die Bandleitungen zwar lose (elastisch) innerhalb der Kammer angeordnet sind, aber gleichzeitig in ihrer Lage definiert gehalten werden. Es kann also kein Umklappen oder Querstellen der einzelnen Bandleitungen erfolgen. Die einzelnen Bandleitungen bilden eine Art "Bandfederstruktur", die elastisch im Inneren der Kammer gehalten ist und eine größtmögliche Beweglichkeit mit gleichzeitiger definierter Lage verbindet.

Da die Außenabmessungen einer derartigen Lichtwellenleiterader nicht beliebig groß gemacht werden können, ergeben sich Schwierigkeiten, wenn eine größere Anzahl von Lichtwellenleitern innerhalb eines Kabels untergebracht werden sollen.

Der vorliegenden Erfindung liegt weiterhin die Aufgabe zugrunde, einen Weg aufzuzeigen, auf dem ein optisches Kabel so ausgebildet werden kann, daß bei guten mechanischen Eigenschaften und schonender Unterbringung der Lichtwellenleiter auch eine größere Anzahl innerhalb des Kabels Platz finden kann.

Gemäß einer Weiterbildung der Erfindung wird diese Aufgabe bei einem opitschen Kabel der eingangs genannten Art dadurch gelöst, daß mehrere Lichtwellenleiteradern mit ihren Breitseiten nebeneinander angeordnet sind und die so gebildete Kabelseele von einem Außenmantel umschlossen ist.

Da die Lichtwellenleiteradern mit ihren Breitseiten nebeneinander angeordnet sind, bleibt die Lage aller Bandleitungen bezüglich der bevorzugten Biegeebene genauso erhalten wie bei nur einer einzigen Lichtwellenleiterader. Darüberhinaus ist der Aufbau einer Kabelseele deswegen besonders einfach, weil Vorrat hergestellt und zur Kabelseele zusammengefaßt werden können. Dabei ist es vorteilhaft, wenn die einzelnen Lichtwellenleiteradern zwar mit ihren Breitseiten aneinander liegen, jedoch gegeneinander verschiebbar angeordnet sind.

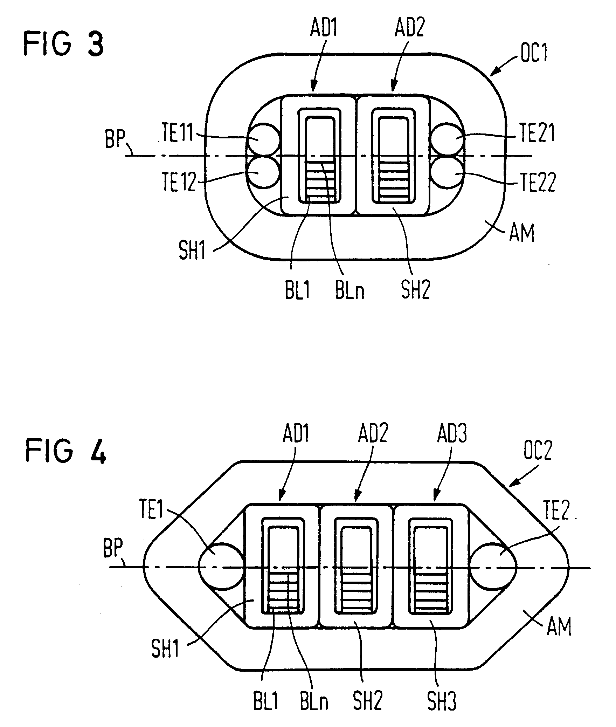

In Fig. 3 ist die Stirnseite eines optischen Kabels OCl dargestellt, dessen Kabelseele aus zwei Lichtwellenleiteradern AD1 und AD2 besteht. Diese Lichtwellenleiteradern haben einen rechteckigen Querschnitt und liegen mit ihren Breitseiten beweglich aneinander. Im Inneren dieser Lichtwellenleiteradern AD1 und AD2 ist jeweils ein Bandleitungsstapel aus n Bandleitungen angebracht, die mit BL1 und BLn bezeichnet sind. Jede dieser Bandleitungen erhält eine Anzahl von m, b.B. 2-6 Lichtwellenleitern. Die Bandleitungen BL1-BLn ind beweglich innerhalb der rechteckförmigen Innenöffnung der Schutzhülle SH1 bzw. SH2 der Adern AD1, AD2 angeordnet. Darüberhinaus ist jeder Stapel von Bandleitungen BL1-BLn in Kabellängsrichtung gesehen wellenförmig geführt, so daß ein Umklappen oder Umkippen der Bandleitungen vermieden ist und gleichzeitig eine gewisse Überlänge bereitgestellt wird. In der bevorzugten Biegeebene BP oder symmetrisch zu dieser, sind zugfeste Elemente, z.B. in Form von Stahldrähten angeordnet, die im vorliegenden Beispiel mit TE11 und TE22 bezeichnet sind. Sie liegen direkt an der jeweils äußeren Breitseite der Adern AD1 und AD2 an. Ein Außenmantel AM aus extrudiertem und aufgeschrumpften Material hält die Gesamtanordnung zusammen, wobei sowohl die Lichtwellenleiteradern AD1 und AD2 als auch die zugfesten Elementen TE11-TE22 untereinander und gegeneinander beweglich angeordnet sind. Dies schafft besondere Vorteile beim Biegevorgang, weil entsprechende Ausgleichsvorgänge leichter durchgeführt werden können.

Nimmt man an, daß jeweils sechs Bandleitungen vorgesehen sind (d.h. n = 6) und jede dieser Bandleitungen jeweils vier Lichtleitfasern enthält, dann ergeben sich etwa folgende Abmessungen:

```
Lichte Weite der Adern AD1 und AD2          1,6 x 4,0 mm
Außenabmessungen der Adern AD1, AD2         3,2 x 5,6 mm
Faserüberlänge:                             4 x 10⁻³
Gesamtzahl der optischen Fasern:            48
```

Bei dem Ausführungsbeispiel nach Figur 4, wo drei Lichtwellenleiteradern AD1-AD3 vorgesehen sind, lassen sich unter Zugrundelegung der vorher genannten Zahlenwerte insgesamt 72 Lichtleitfasern in einem Kabel OC2 unterbringen.

Der Außenmantel AM wird in beiden Fällen etwa in der Größenordnung von 2 mmm Wandstärke gewählt, so daß das Kabel nach Fig. 4 etwa Außenabmessungen in der Größenordnung 17,6 mm x 9,6 mm aufweist und somit leicht in jeden Rohrzug eingezogen werden kann und in üblicher Weise belastbar ist. Die Biegung erfolgt nur bevorzugt in einer Ebene, nämlich in der Ebene BP, d.h. die zugfesten Elemente TE1 und TE2 bzw. TE11 bis TE22 liegen in oder symmetrisch zur Biegeebene BP. Da das Kabel sich Trassenkrümmungen unter mäßiger Torsion anpaßt, ist die Einziehbarkeit nur wenig behindert. Der Vorteil des erfindungsgemäßen Kabels liegt in der Kombination von Bändchenstruktur bei den Lichtwellenleitern, leichter Abzweig- und Aufteilbarkeit und deutlicher (d.h. definierter) Faserüberlänge.

**Patentansprüche**

1. Optisches Kabel mit mindestens einer eine Schutzhülle (SH) aufweisenden Lichtwellenleiterader (AD), die eine im wesentlichen rechteckige Innenöffnung aufweist, welche eine Kammer (CA) zur Aufnahme von Lichtwellenleitern bildet, wobei in der Kammer (CA) jeweils eine Anzahl von Bandleitungen (BLI-8Ln) mit jeweils mehreren Lichtwellenleitern in Form eines Bandleitungsstapels untergebracht sind, und wobei die Lichtwellenleiterader (AD) eine Biegeebene (BP) mit geringstem Biegewiderstand aufweist und die Bandleitungen (BLI-BLn) mit ihren Breitseiten im wesentlichen parallel zu dieser Biegeebene (BP) angeordnet sind,

   **dadurch gekennzeichnet,**

   daß der Bandleitungsstapel mit seinen Bandleitungen (BL1-BLn) wellenförmig geschwungen derart in der Kammer (CA) geführt ist, daß die Auslenkung des Bandleitungsstapels quer zur Biegeebene (BP) mit dem geringsten Biegewiderstand verläuft, daß die Höhe (H) der Kammer (CA) so bemessen ist, daß die aus dem kleinstmöglichen Trommelradius folgende Straffung der äußersten Bandleitung (BL4 in Fig. 2) und die Stauchung der innersten Bandleitung (BL1 in Fig. 2) ohne eine unzulässig hohe mechanische Beanspruchung der Bandleitungen (BL1-813) vor sich geht, daß durch die wellenförmige Führung des Bandleitungsstapels dieser eine Art Bandfederstruktur bildet und daß die Bandleitungen seitlich ein gewisses Spiel zur Kammerwandung aufweisen derart, daß ein Umklappen oder Querstellen der Bandleitungen (BL1-BLn) verhindert ist.

**2.** Optisches Kabel nach einem der vorhergehenden Ansprüche, **dadurch gekennzeichnet**, daß die Gesamthöhe des wellenförmig verlaufenden Bandleitungsstapels (n h) weniger als 50 % der Höhe (H) der Kammer (CA) ausmacht.

**3.** Optisches Kabel nach einem der vorhergehenden Ansprüche, **dadurch gekennzeichnet**, daß die Breite er Bandleitungen (BL1-BLn) zwischen 60 % und 90 % der Breite (B) der Kammer (CA) ausmacht.

**4.** Optisches Kabel nach einem der vorhergehenden Ansprüche , **dadurch gekennzeichnet**, daß die beim Auftrommeln auf der Außen- bahn liegende Bandleitung (BL4) gerade noch nicht gestreckt oder zumindest nicht gespannt ist.

**5.** Optisches Kabel nach einem der vorhergehenden Ansprüche, **dadurch gekennzeichnet**, daß die beim Auftrommeln auf der Innenbahn liegende Bandleitung (BL1) mit ihren Krümmungsradius im Bereich der stärksten Krümmung nicht unter 60 mm sinkt.

**6.** Optisches Kabel nach einem der vorhergehenden Ansprüche, **dadurch gekennzeichnet,** daß das Verhältnis der Höhe (H) zur Breite (B) der Kammer (CA) zwischen 2 : 1 und 4 : 1 gewählt ist.

**7.** Optisches Kabel nach einem der vorhergehenden Ansprüche, **dadurch gekennzeichnet**, daß die Periodenlänge (P) des wellenförmig geschwungenen Bandleitungsstapels zwischen 40 und 80 mm, vorzugsweise um 60 mm gewählt ist.

**8.** Optisches Kabel nach einem der vorhergehenden Ansprüche, **dadurch gekennzeichnet**, daß das Kabel (OC) selbst bereits die Lichtwellenleiterader bildet.

**9.** Optisches Kabel nach einem der vorhergehenden Ansprüche, **dadurch gekennzeichnet**, daß bei Verwendung von Schutzhüllen mit rechteckigen, äußeren Querschnitten, mehrere Lichtwellenleiteradern (AD1, AD2) mit ihren Breitseiten nebeneinander angeordnet sind und die so gebildete Kabelseele von einem Außenmantel (AM) umschlossen ist.

**10.** Optisches Kabel nach einem der vorhergehenden Ansprüche, **dadurch gekennzeichnet**, daß die Lichtwellenleiteradern (AD1, AD2) gegeneinander verschiebbar angeordnet sind.

**11.** Optisches Kabel nach einem der vorhergehenden Ansprüche, **dadurch gekennzeichnet**, daß in der bevorzugten Biegeebene (BP) oder symmetrisch zu dieser, zugfeste Elemente (TE11-TE22) angeordnet sind.

**12.** Optisches Kabel nach Anspruch 11, **dadurch gekennzeichnet**, daß die zugfesten Elemente (TE11-TE22) an den jeweils äußeren Breitseiten der Lichtwellenleiteradern (AD1, AD2) anliegen.

## Claims

**1.** Optical cable with at least one optical waveguide (AD) which has a protective covering (SH) and a substantially rectangular internal opening which forms a chamber (CA) for accepting optical fibers, in each case a number of ribbon conductors (BL1-BLn) each having a plurality of optical fibers being accommodated in the chamber (CA) in the form of a ribbon conductor stack, and the optical waveguide (AD) having a plane of flexure (BP) with the smallest flexural resistance and the ribbon conductors (BL1-BLn) being arranged with their broad sides substantially parallel to this plane of flexure (BP), characterized in that the ribbon conductor stack with its ribbon conductors (BL1-BLn) is guided in an undulatingly curved fashion in the chamber (CA) such that the excursion of the ribbon conductor stack extends transverse to the plane of flexure (BP) with the smallest flexural resistance, in that the height (H) of the chamber (CA) is dimensioned such that the tensioning of the outermost ribbon conductor (BL4 in Figure 2) following from the smallest possible drum radius and the compression of the innermost ribbon conductor (BL1 in Figure 2) proceed without an impermissibly high mechanical loading of the ribbon conductors (BL1-BL3), in that owing to the undulating guidance of the ribbon conductor stack the latter forms a type of strip spring structure, and in that laterally the ribbon conductors have a certain play with respect to the chamber wall such that turning up or down or cross-positioning of the ribbon conductors (BL1-BLn) is prevented.

2. Optical cable according to Claim 1, characterized in that the total height of the ribbon conductor stack (n h) extending in an undulating fashion amounts to less than 50% of the height (H) of the chamber (CA).

3. Optical cable according to one of the preceding claims, characterized in that the width of the ribbon conductors (BL1-BLn) amounts to between 60% and 90% of the width (B) of the chamber (CA).

4. Optical cable according to one of the preceding claims, characterized in that the ribbon conductor (BL4) lying on the outer run during winding on is precisely not yet stretched, or at least not tensioned.

5. Optical cable according to one of the preceding claims, characterized in that in the range of the strongest curvature the radius of curvature of the ribbon conductor (BL1) lying on the inner run during winding on does not drop below 60 mm.

6. Optical cable according to one of the preceding claims, characterized in that the ratio of the height (H) to the width (B) of the chamber (CA) is chosen between 2:1 and 4:1.

7. Optical cable according to one of the preceding claims, characterized in that the periodic length (P) of the undulatingly curved ribbon conductor stack is chosen between 40 and 80 mm, preferably about 60 mm.

8. Optical cable according to one of the preceding claims, characterized in that the cable (OC) itself already forms the optical waveguide.

9. Optical cable according to one of the preceding claims, characterized in that given the use of protective coverings with rectangular external cross sections, a plurality of optical waveguides (AD1, AD2) are arranged with their broad sides next to one another and the cable core thus formed is surrounded by an outer sheath (AM).

10. Optical cable according to one of the preceding claims, characterized in that the optical waveguides (AD1, AD2) are arranged displaceably with respect to one another.

11. Optical cable according to one of the preceding claims, characterized in that elements strong in tension (TE11-TE22) are arranged in the preferred plane of flexure (BP) or symmetrically with respect to the latter.

12. Optical cable according to Claim 11, characterized in that the elements (TE11-TE22) strong in tension bear in each case against the outer broad sides of the optical waveguides (AD1, AD2).

## Revendications

1. Câble optique comportant au moins un coeur (AD) à guides d'ondes lumineuses possédant une gaine protectrice (SH) et qui possède une ouverture intérieure sensiblement rectangulaire, qui forme une chambre (CA) destinée à loger des guides d'ondes lumineuses, et dans lequel respectivement un certain nombre de conducteurs en forme de bandes (BL1-BLn) comportant chacun plusieurs guides d'ondes lumineuses sont logés, sous la forme d'une pile de conducteurs en forme de bandes dans la chambre (CA), et le coeur (AD) à guides d'ondes lumineuses possède un plan de flexion (BP) présentant une résistance extrêmement faible à la flexion et les conducteurs en forme de bandes (BL1-BLn) sont disposés avec leurs petits côtés sensiblement parallèles à ce plan de flexion (BP), caractérisé par le fait que la pile de conducteurs en forme de bandes (BL1-BLn) est guidée selon une forme courbe ondulée dans la chambre (CA) de telle sorte que la déviation de la pile de conducteurs en forme de bandes s'effectue transversalement par rapport au plan de flexion (BP) présentant la plus faible résistance à la flexion, que la hauteur (H) de la chambre (CA) est dimensionnée de telle sorte que la mise en extension du conducteur en forme de bande le plus extérieur (BL4 sur la figure 2), qui est due au rayon le plus petit possible du tambour, et la compression du conducteur en forme de bande le plus intérieur (BL1 sur la figure 2) sont obtenues sans aucune contrainte mécanique élevée inadmissible des conducteurs en forme de bandes (BL1-BL3), que sous l'effet du guidage ondulé de la pile de conducteurs en forme de bandes, cette pile forme une sorte de structure de ressort à ruban et que les conducteurs en forme de bandes possèdent latéralement un certain jeu par rapport à la paroi de la chambre de sorte qu'un retournement ou un positionnement transversal des conducteurs en forme de bandes (BL1-BLn) est empêché.

**2.** Câble optique suivant l'une des revendications précédentes, caractérisé par le fait que la hauteur de la pile de conducteurs en forme de bandes (n h), qui possède une forme ondulée, est égale à au moins 50 % de la hauteur (H) de la chambre (CA).

**3.** Câble optique suivant l'une des revendications précédentes, caractérisé par le fait que la largeur des conducteurs en forme de bandes (BL1-BLn) est comprise entre 70 % et 90 % de la largeur (B) de la chambre (CA).

**4.** Câble optique suivant l'une des revendications précédentes, caractérisé par le fait que le conducteur en forme de bande (BL4), qui lors de l'enroulement est situé sur la piste extérieure, n'est précisément pas encore étiré ou n'est au moins pas tendu.

**5.** Câble optique suivant l'une des revendications précédentes, caractérisé par le fait que le rayon de courbure du conducteur en forme de bande (BL1), situé sur la piste intérieure lors de l'enroulement, ne tombe pas au-dessous de 60 mm, au niveau de la courbure maximale.

**6.** Câble optique suivant l'une des revendications précédentes, caractérisé par le fait que le rapport de la hauteur (H) à la largeur (B) de la chambre (CA) est choisi pour être compris entre 2:1 et 4:1.

**7.** Câble optique suivant l'une des revendications précédentes, caractérisé par le fait que la longueur (P) de la période de la pile formée de conducteurs en forme de bandes, qui possède une forme courbe ondulée, est choisie entre 40 et 80 mm et de préférence au voisinage de 60 mm

**8.** Câble optique suivant l'une des revendications précédentes, caractérisé par le fait que le câble (OC) lui-même constitue déjà le conducteur à guides d'ondes optiques.

**9.** Câble optique suivant l'une des revendications précédentes, caractérisé par le fait que dans le cas de l'utilisation de gaines protectrices possédant une section transversale extérieure rectangulaire, plusieurs coeurs (AD1, AD2) à guides d'ondes lumineuses sont disposés côte-à-côte dans le sens de leur largeur et que l'âme ainsi formée du câble est entourée par une enveloppe extérieure (AM).

**10.** Câble optique suivant l'une des revendications précédentes, caractérisé par le fait que les coeurs (AD1, AD2) à guides d'ondes lumineuses sont disposés de manière à être déplaçables les uns par rapport aux autres.

**11.** Câble optique suivant l'une des revendications précédentes, caractérisé par le fait que des éléments (TE11-TE22) résistant à la traction sont disposés dans le plan de flexion préféré (BP) ou symétriquement par rapport à ce dernier.

**12.** Câble optique suivant la revendication 11, caractérisé par le fait que les éléments (TE11-TE22) résistant à la traction s'appliquent contre les petits côtés extérieurs respectifs des coeurs (AD1, AD2) à guides d'ondes lumineuses.

FIG1

FIG2

**FIG 3**

**FIG 4**